# EUROPEAN PATENT SPECIFICATION

(11) **EP 0 664 007 B1**
(45) Date of publication and mention of the grant of the patent: **26.03.1997**
(21) Application number: 93922017.4
(22) Date of filing: 06.10.1993
(51) Int. Cl.: G01S 5/00

(54) **VEHICLE NAVIGATION SYSTEM**
FAHRZEUG-NAVIGATIONSSYSTEM
SYSTEME DE NAVIGATION POUR VEHICULE

(30) Priority: 07.10.1992 GB 9221107
(43) Date of publication of application: 26.07.1995
(73) Proprietor: FORD-WERKE AKTIENGESELLSCHAFT, 50735 Köln (DE); FORD FRANCE S. A., 92506 Rueil-Malmaison Cédex (FR); FORD MOTOR COMPANY LIMITED, Brentwood, Essex CM13 3BW (GB)
(72) Inventor: HERBERT, Martin John, Devonald, Great Waltham, Essex (GB)
(74) Representative: Messulam, Alec Moses
(86) International application number: GB9302071
(87) International publication number: WO9408250

(56) References cited:
- DE-C- 2 801 142
- DE-C- 4 123 097
- GB-A- 2 247 128

## Description

### Field of the invention

The present invention relates to a navigation system for a motor vehicle.

### Background of the invention

Various systems are known for vehicle navigation which use dead reckoning and/or satellite navigation equipment to locate the position of the vehicle on a map. To be of use, the maps stored must be detailed and the disadvantage of this is that the system requires large amounts of memory.

RDS-TMC systems are known which assist drivers to avoid bottlenecks by transmitting a digital message over a radio channel to the driver to warn of traffic jams.

The closest prior art known to the Applicants is EP 0 478 438. This patent describes the use of RDS-TMC in conjunction with signal from a satellite global positioning system (GPS), odometer and compass measurements and a map database, and is similar to the present application in these respects. However, this reference relies on the use of a raster map and employs colour overlays on this map to highlight problems reported by RDS-TMC. A raster map is one stored in memory as a series of colour pixels, which, when presented on a screen, provides, a colour picture similar to a printed map. There is no way of cross-relating the position of a vehicle to the roads drawn on the map, and the memory storage requirements are high. To ensure that the vehicle position is shown accurately enough on the map to align with the roads pictured, an accurate version of GPS called differential GPS is used in the patent, where corrections are broadcast to the vehicle from a fixed site. In between GPS readings, the compass and odometer are used to track the vehicle's progress across the map picture.

EP-A-0 323 229 describes a route searching system of a navigation apparatus, which relies on the use of a vector map to provide the driver with navigational guidance. In this case, the vector map employed to enable accurate route guidance to be given to the driver records the position of the centreline of each road over its entire length to allow progress of the vehicle to be monitored. At each node or road intersection, each combination of entry and exit point is recorded as a different vector and once again the complexity of the system is such as to require large amounts of memory.

Route planning systems have also been developed that require less storage of data. In such route finding systems, the intersections between roads constitute nodes and the data stored is made up of nodes, having known coordinates, and links connecting the nodes. Data is stored for each link to enable routes to be selected so that the length, average speed, type of road (e.g. motorway, dual carriage way etc), weight limit, height limit or width limit may be stored in addition to the nodes connected by the link, but no attempt is made to define map coordinates for each point on a link.

Though, such systems require less data to be stored, they have not been used in vehicle navigation and their use has been confined to fixed computer installations to provide a recommended route before the journey was commenced.

### Object of the invention

The present invention seeks to provide an improved navigation system which combines the advantages of the individual systems mentioned above while minimising the hardware requirements for data storage and processing.

### Summary of the invention

According to the present invention, there is provided a vehicle navigation system as claimed in claim 1.

The present invention relies on a very simple map database that is carried in the vehicle. This is a vector map, so called because it consists of nodes at junctions whose coordinates are known, connected by vectors of unspecified shape which connect the nodes and define attributes such as the actual road distance and typical drive times together with constraints such as banned turns and width and weight restrictions.

One cannot draw a raster picture from this information but the position of each junction is accurately known. A vector map of this sort typically requires one-eightieth of the memory storage of the equivalent raster map. Hence, whereas EP 0 475 438 mentions that a CD-ROM (these have capacity in excess of 600 Mbytes) is required to store data for a whole country and a hard disk (typical capacity 40-100 Mbytes) is required for just one region of a country, in the present invention the vector data for a whole country can be stored in semiconductor memory chips, requiring typically only 16 Mbytes of memory.

The present invention therefore differs from EP 0 478 438 by the fact that it is sufficiently inexpensive and robust to find practical application in a vehicle environment, which is not well suited to disk based memories, be they CD-ROM or hard disk. The invention does not seek to indicate to the driver his position on a map. Apart from being complex to achieve, this does not provide the driver with the easiest of instructions. What the invention does provide is clear, preferably textual rather than graphic, instructions at each junction as to the direction by which the driver should leave the junction to arrive in the quickest time at his desired destination, even taking into consideration changing data such as traffic information.

It is not always possible to assume that the driver has followed the instructions given by the navigation system and the vehicle is travelling along the instructed itinerary. In a preferred feature of the invention, the navigation system includes means for detecting such deviation from the instructed route while working within the constraints imposed by the use of a limited vector map.

In accordance with a preferred embodiment of the invention, the length of link is stored and the measured distance travelled after each node is subtracted from the length of the link. The remaining length of the link is then compared with the distance in a straight line between the current position of the vehicle and the position of the next node. If the distance in a straight line to the next node exceeds the remaining length of the link, then it is assumed that the incorrect route has been followed and a new route is determined connecting the current vehicle position to the desired destination.

The database in this case carries the length of a road joining two junctions but does not know its shape. The GPS in the vehicle can calculate where the vehicle is at any time and the database carries the position of the next junction. The in-vehicle computer can therefore calculate the straight line distance between the GPS position and the position of the next junction and compare it with the length of the road link less the odometer distance already travelled from the previous junction. If this distance is less than the straight line distance at any time, allowing for tolerances, the vehicle must be off-route. A compass is not used, nor is the differential correction of GPS, the system being designed to accept the poorer tolerances of uncorrected GPS.

The output means may be a voice synthesiser or a visual display.

Conveniently, the system further comprises means for entering data into the system by the driver to indicate, for example, desired destination, current position, height limits etc. Such input means may be a keyboard, a light pen a mouse, tracker ball or the like input device.

The information stored on links may preferably include expected times to traverse the entire length of the link under different traffic conditions, such as normal conditions, rush hours etc. In this way, for example, the driver may be routed through city centre if travelling at night but directed to follow a ring road if travelling during rush hours.

The invention will now be described further, by way of example, with reference to the accompanying drawings which is a schematic representation of a system of the invention.

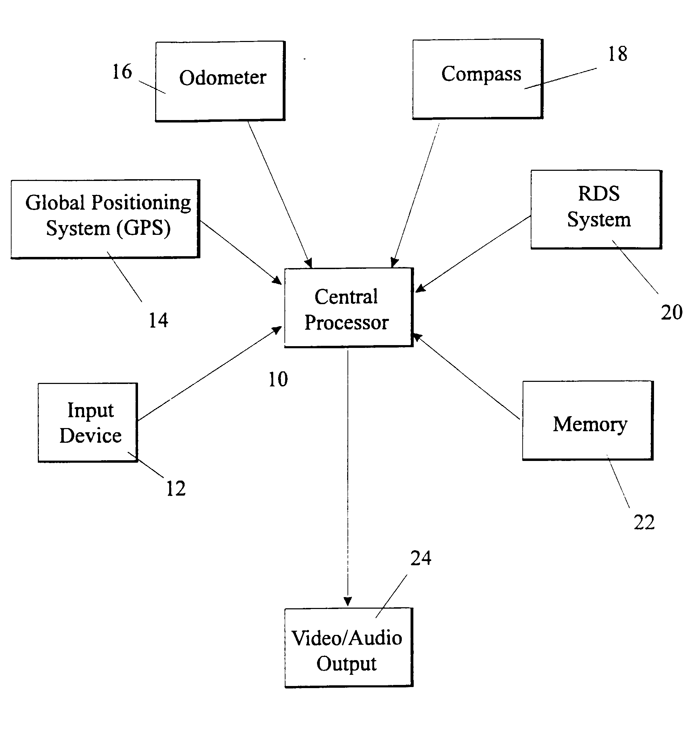

The drawing show a central processor 10 is a programmed computer that may be based on an industry standard micro-computer, for example one based on an Intel 80386 processing chip.

The RDS-TMC system 20 may be of known construction, and its function is to extract from a radio signal encoded traffic message information. This information is currently transmitted in digital form and includes information identifying the links affected by the traffic message as well as data identifying the extent of the delay.

The GPS satellite navigation system 14 is also known per se but one may use other positioning systems to determine the absolute map coordinates of the vehicle, for example one may use a system relying on land beacons.

In the case of satellite navigation systems, the data is not continuously available and the purpose of the odometer 16 and compass 18 connected to the central processor 10 is to permit the position of the vehicle to be estimated by dead reckoning between readings from the GPS system.

The central processor 10 connected to a memory 22 which contains both program information and navigation data, an output device for giving the driver directions either by displaying text on a screen or by using a voice synthesiser, and an input device 12 to allow the driver to communicate with the central processor, for example to indicate the desired destination. This may be a keyboard or more conveniently a pointing device such as a light pen or a tracker ball.

It can be seen from the above description that the invention may be implemented using conventional currently available hardware, and it is believed that the construction of the hardware will be understood by the person skilled in the art without the need for further detailed explanation.

The operation of the system is as follows:-

The memory 22 stores data on nodes which correspond to road intersections and vectors connecting these nodes. The term "vector" is used to represent each link connecting two nodes but the information stored about these links does not provide map coordinates and a bearing for each point on the link but data indicating the length of the road and other scalar data such as the average road speed at different times of day, weight and width limits along the road and so on. From this information the processor can determine the combination of links that results in the shortest time between the origin and the desired destination.

This data and the program for processing the data may be similar to those currently used on route planning programs that operate on a personal desktop computer.

RDS-TMC messages are decoded from their RDS groups by the in-vehicle radio receiver 20, the coded messages being stored in a buffer until called by the vehicle navigation system. Whenever the processor 10 is not servicing other interrupts, it transfers these coded messages into a file, overwriting old copies of the same message, uses databases stored in memory to translate the messages and locations and cross-reference tables to convert the messages into changed travel times for the equivalent links in the route planner network which are then redefined. The TMC file is regularly updated to ensure that the message is still valid according to its duration.

When a new route is planned, the optimum route is selected using the network as modified by the TMC messages, checking to ensure that the message will still be valid when the vehicle is predicted to reach that part of its route. Each link is also further modified by the time-of-day information according to a road type attribute. To adjust the link times according to the time of day, each road type attribute carries a set of times and related percentages of free-flow link speed. Once the planner has established when the link will be reached, the time for that link is interpolated from this information.

When the vehicle is following a planned route and a new TMC message is received, the locations affected are checked against the links and nodes of the existing planned route. If any location matches, the converted message is announced to the screen and/or by the speech synthesiser 24. The effect on the link times is also calculated.

At this time, the relative performance of the vehicle on the links it has covered are also used to adjust predicted times for future links and the route replanned. To achieve this, the processor 10 processes the stored data to modify the predicted speed along the links still remaining in dependence upon the deviation of the actual vehicle speed from the predicted vehicle speed along links already covered during the journey. If an alternative route is found which is a predetermined number of minutes better than the modified existing route, it is offered to the driver. The route is also recalculated every time the vehicle passes a node. An estimated time of arrival and remaining distance to the destination are continually updated.

Route guidance instructions are stored as text and displayed and announced when the vehicle is first within a radial distance of the node determined by the class of road and speed of the vehicle. Where lines of text contain distance information, this is evaluated and the odometer input is used to announce these instructions at the appropriate position.

It cannot always be assumed that the driver has correctly followed the instructions given and the system includes a check which allows an "Off-Route" condition to be detected.

If the odometer reading since passing through a node exceeds the difference between the length of the node and distance in a straight line from the present position of the vehicle (as determined by the GPS system 14) to the next node, allowing for tolerance, or if a node is reached which does not lie on the planned route, the vehicle is declared to be "Off-Route". On acknowledgement by the driver, the driver is asked directed to the nearest node on the stored network and a new route is planned to the desired destination from that node.

## Claims

1. A vehicle navigation system, comprising an absolute positioning system (14) for determining the current map coordinates of the vehicle, distance and direction measuring means (16,18) for enabling the actual position of the vehicle to be estimated when data derived from the absolute positioning system is not available, storage means (22) for storing map data, means (20) for receiving and decoding signals transmitted over a radio traffic message channel, processing means (10) for computing an optimum route between the current vehicle location and the desired destination, and output means (24) under the control of the processing means (10) for providing navigational guidance to the vehicle driver, characterised in that the map data stored in the storage means (22) comprises only information on nodes representing road intersections and links connecting the nodes, in that the processing means (10) is operative to process stored data relating to the links between nodes in dependence upon the traffic message channel data, and in that the output means (24) comprises means for indicating to the driver a recommended direction of travel at each road intersection corresponding to a stored node.

2. A system as claimed in claim 1, wherein the information stored on links includes expected times to traverse the entire length of the link under different traffic conditions.

3. A navigation system as claimed in claim 2, wherein the processing means (10) is additionally operative to process the stored data to modify the average speed along the links in dependence upon the time of day.

4. A navigation system as claimed in claim 2 or 3, wherein the processing means (10) is additionally operative to process the stored data to modify the predicted speed along the links in dependence upon the deviation of the actual vehicle speed from the predicted vehicle speed along links already covered during a journey.

5. A system as claimed in claim 1, wherein the output means (24) includes a voice synthesiser and/or a visual display.

6. A system as claimed in claim 1, wherein the length of each link is stored and the processing means (10) is operative to subtract the measured dictance travelled after each node from the length of the link and to compare the remaining length of the link with the distance in a straight line between the current position of the vehicle and the position of the next node in order to determine if the vehicle is still on course.

## Patentansprüche

1. Ein Fahrzeug-Navigationssystem, das ein System zur Absolutpositionierung (14) zwecks Bestimmung der aktuellen Kartenkoordinaten des Fahrzeugs sowie eine Vorrichtung (16, 18) zur Entfernungs- und Richtungsmessung umfaßt, damit die tatsächliche Position des Fahrzeugs abgeschätzt werden kann, wenn Daten aus dem System zur Absolutpositionierung nicht zur Verfügung stehen, eine Speichervorrichtung (22) zum Speichern von Kartendaten, eine Vorrichtung (20) zum Empfang und zur Entschlüsselung von Signalen, die über einen Verkehrsfunkkanal übermittelt werden, eine Prozessorvorrichtung (10) zur Berechnung einer optimalen Route zwischen der aktuellen Position des Fahrzeugs und dem gewünschten Ziel, und eine von der Prozessorvorrichtung (10) gesteuerte Ausgabevorrichtung (24), um dem Fahrer die Führung für die Navigation bereitzustellen, dadurch gekennzeichnet, daß die in der Speichervorrichtung (22) gespeicherten Kartendaten nur Information über Knoten enthalten, die Straßenkreuzungen darstellen, und über Verbindungsstrecken, die die Knoten verbinden, und dadurch, daß die Prozessorvorrichtung (10) dazu dient, gespeicherte Daten, die sich auf Verbindungen zwischen Knoten beziehen, in Abhängigkeit von den Daten des Verkehrsmeldungskanals zu verarbeiten, und dadurch, daß die Ausgabevorrichtung (24) eine Vorrichtung umfaßt, die dem Fahrer bei jeder Straßenkreuzung, die einem gespeicherten Knoten entspricht, eine empfohlene Fahrtrichtung anzeigt.

2. Ein System nach Anspruch 1, worin die über die Verbindungen gespeicherte Information zu erwartende Zeiten zum Durchfahren der gesamten Länge der Verbindung unter verschiedenen Verkehrsbedingungen einschließt.

3. Ein Navigationssystem nach Anspruch 2, worin die Prozessorvorrichtung (10) zusätzlich dazu dient, die gespeicherten Daten zu verarbeiten, um die durchschnittliche Geschwindigkeit entlang der Verbindungsstrecken in Abhängigkeit von der Tageszeit zu verändem.

4. Ein Navigationssystem nach Anspruch 2 oder 3, worin die Prozessorvorrichtung (10) zusätzlich dazu dient, die gespeicherten Daten zu verarbeiten, um die vorhergesagte Geschwindigkeit entlang der Verbindungen in Abhängigkeit von der Abweichung der tatsächlichen Fahrzeuggeschwindigkeit von der vorhergesagten Fahrzeuggeschwindigkeit auf den während der Fahrt bereits zurückgelegten Verbindungsstrecken zu ändern.

5. Ein System nach Anspruch 1, worin die Ausgabevorrichtung (24) einen Sprachsynthesizer und/oder eine optische Anzeige einschließt.

6. Ein System nach Anspruch 1, worin die Länge jeder Verbindung gespeichert wird und die Prozessorvorrichtung (10) dazu dient, die nach jedem Knoten zurückgelegte gemessene Entfernung von der Länge der Verbindung abzuziehen und die verbleibende Länge der Verbindung mit der Entfemung in gerader Linie zwischen der aktuellen Fahrzeugposition und der Position des nächsten Knotens zu vergleichen, um festzustellen, ob sich das Fahrzeug noch auf Kurs befindet.

## Revendications

1. Système de navigation de véhicule, comprenant un système de positionnement absolu (14) destiné à déterminer les coordonnées en cours du véhicule sur la carte, un moyen de mesure de distance et de direction (16, 18) destiné à permettre d'estimer la position réelle du véhicule lorsque les données obtenues à partir du système de positionnement absolu ne sont pas disponibles, un moyen de mémorisation (22) destiné à mémoriser les données cartographiques, un moyen (20) destiné à recevoir et à décoder des signaux émis sur un canal radio de messages de trafic, un moyen de traitement (10) destiné à calculer un itinéraire optimum entre la position actuelle du véhicule et la destination souhaitée, et un moyen de sortie (24) sous la commande du moyen de traitement (10) destiné à procurer un guidage de navigation au conducteur du véhicule, caractérisé en ce que les données cartographiques mémorisées dans le moyen de mémorisation (22) ne comprennent que des informations concernant les noeuds représentant des intersections de routes, et les liaisons reliant les noeuds, en ce que le moyen de traitement (10) peut être mis en oeuvre pour traiter les données mémorisées se rapportant aux liaisons entre les noeuds suivant les données du canal de messages de trafic, et en ce que le moyen de sortie (24) comprend un moyen destiné à indiquer au conducteur une direction de parcours recommandée à chaque intersection de route correspondant à un noeud mémorisé.

2. Système selon la revendication 1, dans lequel les informations mémorisées concernant les liaisons comprennent les temps prévus pour parcourir la longueur entière de la liaison dans différentes conditions de trafic.

3. Système de navigation selon la revendication 2, dans lequel le moyen de traitement (10) peut être en outre mis en oeuvre pour traiter les données mémorisées afin de modifier la vitesse moyenne suivant les liaisons en fonction de l'heure du jour.

4. Système de navigation selon la revendication 2 ou 3, dans lequel le moyen de traitement (10) peut être en outre mis en oeuvre pour traiter les données mémorisées afin de modifier la vitesse prévue le long des liaisons en fonction de l'écart de la vitesse réelle du véhicule par rapport à la vitesse prévue du véhicule suivant les liaisons déjà couvertes pendant un voyage.

5. Système selon la revendication 1, dans lequel le moyen de sortie (24) comprend un synthétiseur vocal et/ou un dispositif d'affichage visuel.

6. Système selon la revendication 1, dans lequel la longueur de chaque liaison est mémorisée et le moyen de traitement (10) peut être mis en oeuvre pour soustraire la distance mesurée parcourue après chaque noeud, de la longueur de la liaison et de comparer la longueur restante de la liaison, à la distance en ligne droite entre la position en cours du véhicule et la position du noeud suivant, de façon à déterminer si le véhicule est toujours sur son itinéraire.
